(19) Europäisches Patentamt
European Patent Office
Office européen des brevets

(11) Numéro de publication: **0 099 014**
**A2**

(12) **DEMANDE DE BREVET EUROPEEN**

(21) Numéro de dépôt: **83106214.6**

(22) Date de dépôt: **25.06.83**

(51) Int. Cl.³: **C 09 K 3/34**
C 09 B 35/35, C 09 B 1/503

(30) Priorité: **16.07.82 CH 4345/82**

(43) Date de publication de la demande:
**25.01.84 Bulletin 84/4**

(84) Etats contractants désignés:
**DE FR GB**

(71) Demandeur: **ASULAB S.A.**
**Faubourg du Lac 6**
**CH-2502 Bienne(CH)**

(72) Inventeur: **Cognard, Jacques**
**Rue du Suchiez 53**
**CH-2006 Neuchâtel(CH)**

(72) Inventeur: **Basturk, Abdurrahman Naci**
**Marnière 71**
**CH-2068 Hauterive Neuchâtel(CH)**

(74) Mandataire: **Micheli, Michel Pierre et al,**
**MICHELI & CIE 118, Rue du Rhône Case Postale 47**
**CH-1211 Geneve 6(CH)**

(54) **Composition de couleur foncée à base de cristaux liquides.**

(57) Elle consiste en un mélange d'un colorant rouge, le 4,4'-bis (p-diméthylamino-phénylazo)-2-méthyl-azobenzène, d'un colorant jaune, le 4,4'-bis (p-méthoxy-phénylazo)-2-méthyl-azobenzène, et d'un colorant bleu, à savoir un dérivé anthraquinonique représenté par la formule générale (III), dans laquelle A et B sont tels que définis par la revendication 1. Cette composition de couleur foncée, par example noire, peut être utilisée dans une cellule d'affichage dichroïque.

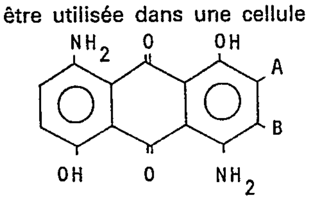

(III)

EP 0 099 014 A2

# Composition de couleur foncée à base de cristaux liquides

La présente invention se rapporte à une composition de couleur foncée à base de cristaux liquides, notamment pour cellule d'affichage dichroïque.

Pour la réalisation d'un affichage dichroïque il est particulièrement intéressant de disposer d'une composition à base de cristaux liquides contenant des colorants respectivement rouge, jaune et bleu afin de donner une couleur foncée, esthétiquement acceptable, à cette composition. Le noir, le bleu foncé, le rouge grenat et le brun foncé sont des couleurs très appréciées pour cette application. Pour qu'un colorant puisse être utilisé pour la préparation du type de composition précitée, il doit, en plus de la couleur requise, présenter les caractéristiques suivantes :

- être soluble dans le mélange de cristaux liquides ;
- être stable photochimiquement ; et
- avoir un paramètre d'ordre élevé.

Le but de cette invention consiste à fournir une composition du type mentionné ci-dessus qui contienne des colorants répondant aux exigences précitées. Ce but est atteint par la composition selon l'invention qui comprend un mélange de cristaux liquides et des colorants respectivement rouge, jaune et bleu, et qui est caractérisée par le fait que le colorant rouge est le 4,4'-bis(p-diméthyl-amino-phénylazo)-2-méthyl-azobenzène de formule (I),

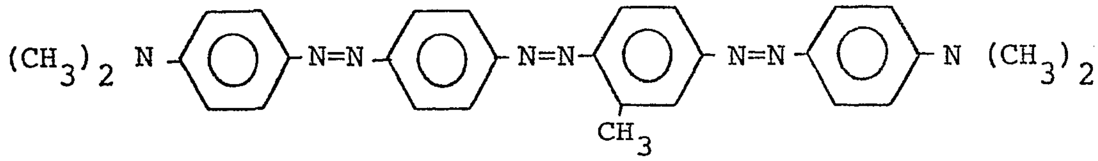

(I)

le colorant jaune est le 4,4'-bis(p-méthoxy-phénylazo)-2-méthyl-azobenzène de formule (II),

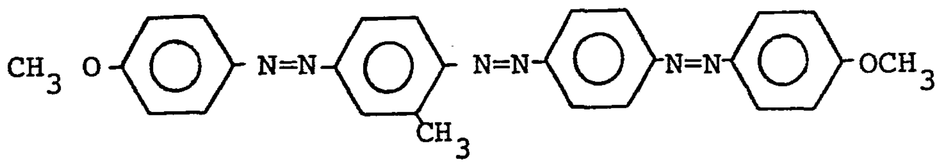

(II)

et le colorant bleu est un dérivé anthraquinonique représenté par la formule générale (III),

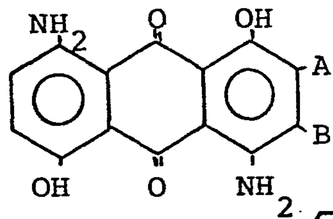

(III)

dans laquelle A est H ou 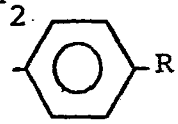 et B est H ou

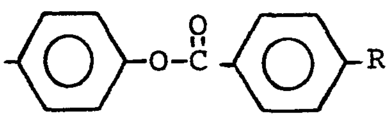, où R et R', identiques ou différents, sont un groupe alkyle ou alkoxy inférieur, et un des A et B étant H lorsque l'autre n'est pas H.

Selon une forme d'exécution particulière de l'invention, lorsque le mélange de cristaux liquides présente une anisotropie diélectrique positive, le colorant bleu utilisé est un dérivé de formule (III) dans laquelle A est 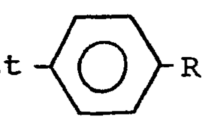 et B est H.

Selon une autre forme d'exécution, lorsque le mélange de cristaux liquides présente une anisotropie diélectrique négative, le colorant bleu utilisé est un dérivé de formule (III) dans laquelle A est H et B est

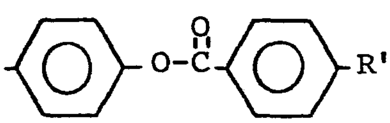.

L'invention sera maintenant illustrée en référence aux exemples suivants.

Exemple 1

Les trois compositions noires suivantes ont été préparées.

- Composition A (dans le mélange de cristaux liquides E43 de CHISSO, à anisotropie diélectrique positive) :

composé rouge (I) : 0,4 %

composé jaune (II) : 0,42 %

composé bleu (IIIa) : 1,08 %

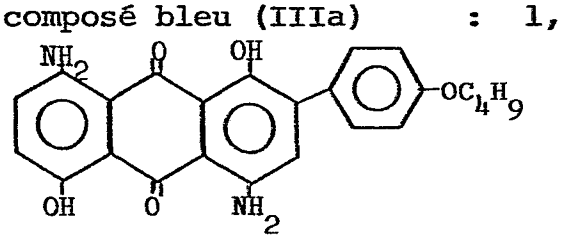

(IIIa)

2(p-butoxy-phényl)1,5-dihydroxy-4,8-diamino-anthraquinone

- Composition B (dans le mélange de cristaux liquides EN24 de CHISSO, à anisotropie diélectrique négative) :

composé rouge (I) : 0,2 %

composé jaune (II) : 0,32 %

composé bleu (IIIb) : 1,0 %

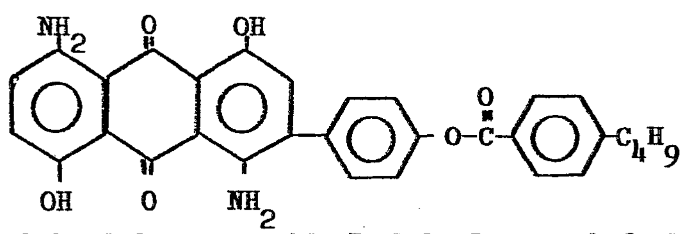

(IIIb)

3(p-butyl-phényl-benzoate)1,5-dihydroxy-4,8-diamino-anthraquinone

- Composition C (dans le mélange de cristaux liquides ALN76 de ASULAB S.A., à anisotropie diélectrique négative):

| | |
|---|---|
| composé rouge (I) | : 0,24 % |
| composé jaune (II) | : 0,36 % |
| composé bleu (IIIb) | : 0,90 % |

Exemple 2

Stabilité à la lumière

Des mesures de stabilité photochimique ont été effectuées d'une part sur les colorants utilisés dans les compositions selon l'invention et pris séparément dans trois mélanges de cristaux liquides et d'autre part sur ces mêmes colorants pour former les compositions noires A, B et C.

On a utilisé pour ces mesures la méthode connue et décrite notamment par J. Cognard et T. Hieu Phan dans Mol. Cryst. Liq. Cryst., vol. 70, p. 1282-83, 1981, et utilisant un appareil "Sun Test" de Leybold-Heraeus.

Sur le Tableau I ci-après ont été reportées les valeurs obtenues, en heures, correspondant à la durée de vie, définie comme le temps au bout duquel la densité optique mesurée est devenue la moitié de la valeur initiale.

Comme on peut le constater sur ce Tableau I, la stabilité photochimique de chaque composition est plus élevée que celle du constituant le moins stable de chaque composition. Or, ceci est inattendu étant donné qu'en principe un constituant instable d'une composition communique son instabilité à l'ensemble de la composition.

Tableau I Stabilité à la lumière (en heures)

| Colorants | Mélange de cristaux liquides $\Delta E > 0$ | $\Delta E < 0$ | |
|---|---|---|---|
| | E43 | EN24 | ALN76 |
| Composé (I) | 150 | <75 | <100 |
| Composé (II) | 300 | <150 | <250 |
| Composé (IIIa) | >1000 | - | - |
| Composé (IIIb) | - | < 250 | <350 |
| Composition A | >500 | - | - |
| Composition B | - | >150 | - |
| Composition C | - | - | 500 |

Exemple 3

Paramètre d'ordre

Le paramètre d'ordre (S) a été déterminé selon la méthode connue et décrite notamment par J. Cognard et T. Hieu Phan dans Mol. Cryst. Liq. Cryst. 70, p. 1282, 1981, et en mesurant la densité optique aux maximums d'absorption de chaque couleur constitutive respective.

Les mesures ont été effectuées (a) sur les colorants présents dans les trois compositions noires A, B et C définies précédemment pris d'une part séparément dans le mélange de cristaux liquides, et d'autre part, dans chacune des compositions, et (b) sur les colorants de deux mélanges noirs commerciaux respectivement D 85/D86 (D85 et D86 mélangés dans un rapport de 1:1) (BDH) et ZLI1841/2+1843 (Merck), également pris d'une part séparément dans le mélange de cristaux liquides, respectivement E63 et ZLI 1840, et d'autre part dans chacun des deux mélanges de référence considérés.

Les résultats obtenus sont présentés dans les Tableaux II et III ci-après. Il ressort de ces résultats que, dans le cas des colorants utilisés dans les compositions selon l'invention, le paramètre d'ordre de chaque colorant est plus élevé dans la composition que lorsqu'il est seul dans le mélange de cristaux liquides (C.L.), alors que le résultat inverse est observé dans le cas des mélanges noirs commerciaux examinés.

Tableau II : Paramètre d'ordre (S) des colorants utilisés dans les compositions selon l'invention

| Colorant | Paramètre d'ordre (S) | | | | | |
|---|---|---|---|---|---|---|
| | col. seul dans C.L. | col. dans compos. A | col. seul dans C.L. | col. dans compos. B | col. seul dans C.L. | col. dans compos. C |
| Composé (IIIa) | 0,74 | 0,79 | - | - | - | - |
| Composé (IIIb) | - | - | 0,66 | 0,70 | 0,69 | 0,73 |
| Composé (I) | 0,78 | 0,80 | 0,70 | 0,75 | 0,76 | 0,79 |
| Composé (II) | 0,77 | 0,80 | 0,73 | 0,76 | 0,76 | 0,79 |

Tableau III : Paramètre d'ordre (S) des colorants de mélanges noirs commerciaux

| Colorant | Paramètre d'ordre (S) | | | |
| --- | --- | --- | --- | --- |
| | col. seul dans C.L. | col. dans mél. noir (BDH) | col. seul dans C.L. | col. dans mél. noir (Merck) |
| bleu | 0,72 | 0,68 | 0,72 | 0,71 |
| rouge | 0,76 | 0,74 | 0,74 | 0,71 |
| jaune | 0,75 | 0,72 | 0,76 | 0,72 |

Exemple 4

Contraste perçu

Le contraste perçu (C), correspondant au rapport de la transmission avec polariseur perpendiculaire au moment de transition du colorant ($T_\perp$) sur la transmission avec polariseur parallèle à ce moment ($T_{//}$), et destiné à donner une indication concrète sur les possibilités d'utiliser un mélange coloré dans une cellule d'affichage dichroïque, a été mesuré pour une composition noire selon l'invention (composition A) et pour deux mélanges commerciaux de référence, respectivement D85/D86 (BDH) et ZLI 1841/2 + 1843 (Merck). La méthode de calcul utilisée pour parvenir aux valeurs de la transmission à partir des spectres enregistrés, est celle décrite par A. Bloom and E.B. Priestley dans IEEE Trans. Electron Devices ED-24, 823 (1977).

Les résultats obtenus sont les suivants :

| | $T_\perp$ (%) | $C = T_\perp / T_{//}$ |
|---|---|---|
| Composition A | 52,5 | 13,98 |
| Mélange noir BDH | 52,8 | 8,68 |
| Mélange noir Merck | 53,7 | 7,67 |

On peut donc constater que le contraste perçu est nettement plus élevé pour la composition selon l'invention que pour les deux mélanges noirs commerciaux de référence.

Les exemples ci-dessus ne concernent que des compositions de couleur noire, car cette couleur est la plus appréciée dans les affichages dichroïques. Il est bien évident, toutefois, que d'autres teintes foncées, telles que le bleu foncé, le rouge grenat et le brun foncé, peuvent être

obtenues en jouant sur les proportions des trois composés de base, les qualités des compositions sombres obtenues restant celles des compositions noires examinées.

Ainsi, les différentes mesures physiques effectuées, à savoir la stabilité à la lumière, le paramètre d'ordre des colorants et le contraste perçu, permettent d'affirmer que les compositions selon l'invention sont parfaitement appropriées pour être utilisées dans la réalisation de cellules à affichage dichroïque, par exemple selon le brevet US 4281903 (avec mélange de cristaux liquides à anisotropie diélectrique négative) ou selon le brevet US 3833287 (avec un mélange de cristaux liquides à anisotropie diélectrique positive). Il est également possible d'utiliser les compositions selon l'invention dans des cellules du type de celle décrite par Heilmeier et al. dans Mol. Cryst. Liq. Cryst. vol. 8, p. 293-303, 1969 ; dans ce cas, la quantité de molécules dichroïques du mélange peut être réduite, une partie de la lumière étant absorbée par un polariseur placé à l'avant de la cellule.

## REVENDICATIONS

1. Composition de couleur foncée à base de cristaux liquides, notamment pour cellule d'affichage dichroïque, comprenant un mélange de cristaux liquides et des colorants respectivement rouge, jaune et bleu, caractérisée par le fait que le colorant rouge est le 4,4'-bis(p-diméthylamino-phénylazo)-2-méthyl-azobenzène de formule (I),

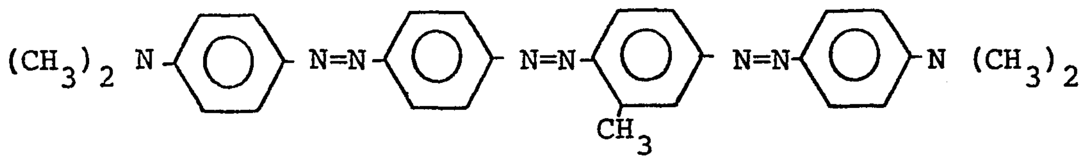

(I)

le colorant jaune est le 4,4'-bis(p-méthoxy-phénylazo)-2-méthyl-azobenzène de formule (II),

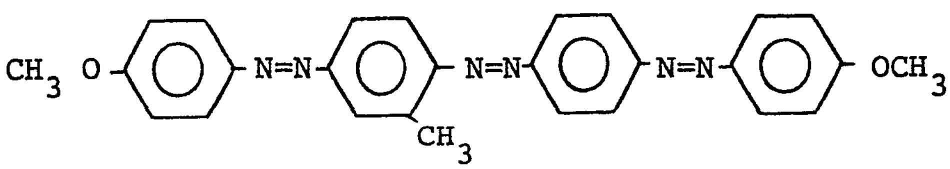

(II)

et le colorant bleu est un dérivé anthraquinonique représenté par la formule générale (III),

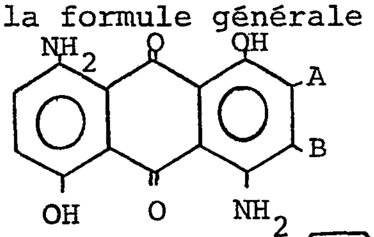

(III)

dans laquelle A est H ou 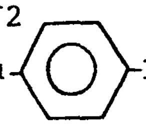 R et B est H ou

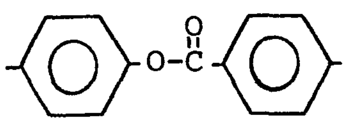 R', où R et R', identiques ou différents, sont un groupe alkyle ou alkoxy inférieur, et un des A et B étant H lorsque l'autre n'est pas H.

2. Composition selon la revendication 1, caractérisée par le fait que, lorsque le mélange de cristaux liquides présente une anisotropie diélectrique positive, le colorant bleu est un composé de formule (III) dans laquelle A est 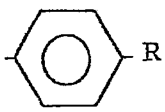 où R est comme défini dans la revendication 1 et B est H.

3. Composition selon la revendication 1, caractérisée par le fait que, lorsque le mélange de cristaux liquides présente une anisotropie diélectrique négative, le colorant bleu est un composé de formule (III) dans laquelle A est H et B est 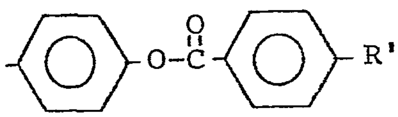 où R' est comme défini dans la revendication 1.

4. Composition noire selon la revendication 2, caractérisée par le fait qu'elle contient environ 0,4 % du composé (I), environ 0,42 % du composé (II) et environ 1,08 % du composé de formule (IIIa) suivante, dans un mélange de cristaux liquides à anisotropie diélectrique positive.

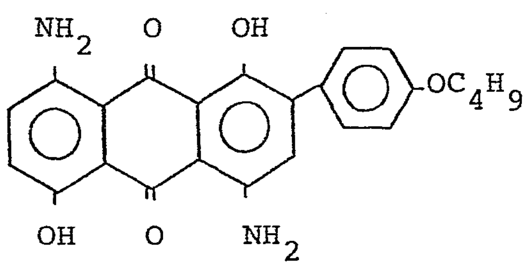

(IIIa)

5. Composition noire selon la revendication 3, caractérisée par le fait qu'elle contient environ 0,2 % du composé (I), environ 0,32 % du composé (II) et environ 1,0 % du composé de formule (IIIb) suivante, dans un mélange de cristaux liquides à anisotropie négative.

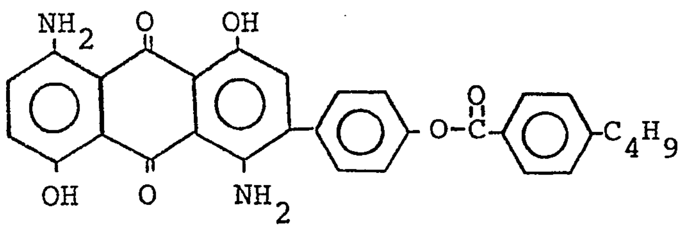

(IIIb)

6. Composition noire selon la revendication 3, caractérisée par le fait qu'elle contient environ 0,24 % du composé (I), environ 0,36 % du composé (II) et environ 0,90 % du composé de formule (IIIb), telle que définie dans la revendication 5, dans un mélange de cristaux liquides à anisotropie négative.